# EUROPEAN PATENT SPECIFICATION

(11) **EP 3 391 439 B1**
(45) Date of publication and mention of the grant of the patent: **03.06.2020**
(21) Application number: 16816408.5
(22) Date of filing: 10.12.2016
(51) Int. Cl.: H01M 4/134, H01M 4/38, H01M 4/62, H01M 10/052

(54) **ELECTRODES FOR LITHIUM ION AND POST LITHIUM ION BATTERIES**
ELEKTRODEN FÜR LITHIUM-IONEN- UND POST-LITHIUM-IONEN-BATTERIEN
ÉLECTRODES POUR LITHIUM-ION ET BATTERIES AU LITHIUM-ION À BORNES

(30) Priority: 15.12.2015 IT UB20159619
(43) Date of publication of application: 24.10.2018
(73) Proprietor: Advanced Technology Partner S.r.l., 15122 San Giuliano Vecchio (AL) (IT)
(72) Inventor: CAPIGLIA, Claudio, Takatsuki Osaka 569-1046 (JP)
(86) International application number: PCT/IB2016/057518
(87) International publication number: WO 2017/103758

(56) References cited:
- JP-A- 2010 118 330
- JP-A- 2013 170 093
- JP-A- 2013 187 097
- JP-A- 2014 185 074
- SUN LI ET AL: "Flowing nitrogen assisted-arc discharge synthesis of nitrogen-doped single-walled carbon nanohorns", APPLIED SURFACE SCIENCE, ELSEVIER, AMSTERDAM, NL, vol. 277, 8 April 2013 (2013-04-08), pages 88-93, XP028550495, ISSN: 0169-4332, DOI: 10.1016/J.APSUSC.2013.04.006
- ZHANG LINWEI ET AL: "A robust fuel cell cathode catalyst assembled with nitrogen-doped carbon nanohorn and platinum nanoclusters", JOURNAL OF POWER SOURCES, vol. 220, 11 August 2012 (2012-08-11), pages 449-454, XP028942225, ISSN: 0378-7753, DOI: 10.1016/J.JPOWSOUR.2012.08.009
- YI ZHAO ET AL: "A nanocomposite of SnO2 and single-walled carbon nanohorns as a long life and high capacity anode material for lithium ion batteries", RSC ADVANCES: AN INTERNATIONAL JOURNAL TO FURTHER THE CHEMICAL SCIENCES, vol. 1, no. 5, 1 January 2011 (2011-01-01) , page 852, XP055344266, GB ISSN: 2046-2069, DOI: 10.1039/c1ra00267h

## Description

The present invention relates to electrodes for Lithium ion batteries, and post-lithium ion batteries that comprise said electrodes. In particular, what is mentioned for the use of such electrodes for post lithium ion batteries means that it can also be used for the Lithium Sulfur Batteries, and therefore with the statement post lithium ion batteries is intended to include and also protect the Lithium Sulfur Batteries.

### State of art

The spread of electric vehicles, and the storage of electrical energy from renewable sources and new high performance portable electronic devices are constrained to the technological advances of rechargeable batteries with particular regards to the advances of lithium ion batteries already commercialized. To meet the growing demand for lithium-ion batteries with higher performance, significant progress should be achieved in terms of power density, energy density, life cycles and reliability, as well as low production costs. Therefore, the principal research focus worldwide is to overcome the limit of commercialized lithium ion batteries and develop batteries with chemistries that are working with principle beyond the intercalation mechanism of typical today lithium ion batteries, the so called: post lithium ion batteries.

The current configuration of lithium ion batteries at the anode side is composed of active material based on graphite. When the battery is charge the lithium ions are intercalated between the carbon planes of graphite forming LiC6; Therefore, the use of graphite-based materials, allows to obtain a theoretical capacity of 372mAhg-1.

The use in the anodes of non-carbon elements would greatly enhance this theoretical capacity, in fact elements such as silicon, germanium and tin have respectively theoretical capacity of 3579mAhg-1 for Silicon (Si), 1600mAhg-1 for Germanium (Ge) and 994mAhg-1 for Tin (Sn)

Until now the use of these new elements in the anodes did not go beyond the construction of experimental prototypes of batteries and there have been no commercial developments to the drawbacks described below. In fact the use on an industrial scale of new active materials for the anodes has been hampered by fragmentation / pulverization phenomena of the active particles due to the high volumetric expansion, (even up to 300% for the silicon) with subsequent contraction during the insertion / extraction of lithium in the charge and discharge cycles phases. These remarkable cyclical expansions / contractions of the active particles cause efforts and internal mechanical stresses to the same occurring mainly in the interface of Lix-Material and are such as to give rise to phenomena of fragmentation / pulverization of the active particles. Furthermore, these phenomena cause other side effects over time: i) the destabilization of the solid electrolyte interface film (SEI); ii) the progressive detachment of the active material from the additive materials with conductive properties causing, at first a reduction of the charge capacity of the anode and, subsequently, inactivity of the batteries after an insufficient number of cycles for possible uses for commercial purposes.

Some examples of of industrially manufacturing process of the electrodes (anodes and cathodes) of lithium ion batteries with carbon nanohorns are shown in the following documents:
- SUN LI ET AL, "Flowing nitrogen assisted-arc discharge synthesis of nitrogen-doped single-walled carbon nanohorns", APPLIED SURFACE SCIENCE, ELSEVIER, AMSTERDAM, NL, (20130408), vol. 277, doi:10.1016/J.APSUSC.2013.04.006, ISSN 0169-4332;
   - JP2013170093
   - ZHANG LINWEI ET AL, "A robust fuel cell cathode catalyst assembled with nitrogen-doped carbon nanohorn and platinum nanoclusters", JOURNAL OF POWER SOURCES, (20120811), vol. 220, doi:10.1016/J.JPOWSOUR.2012.08.009, ISSN 0378-7753;
   - JP2014185074;
   - YI ZHAO ET AL, "A nanocomposite of SnO2 and single-walled carbon nanohorns as a long life and high capacity anode material for lithium ion batteries", RSC ADVANCES: AN INTERNATIONAL JOURNAL TO FURTHER THE CHEMICAL SCIENCES, GB, (20110101), vol. 1, no. 5, doi:10.1039/c1ra00267h, ISSN 2046-2069.

The main proposals to date solutions can be summarized as follows: i) the reduction of the size of the particles of the active materials from the micrometer scale to the nanometer scale, which has made it possible to limit the mechanical tensions that give rise to fragmentation / pulverizing phenomena; ii) the use of materials, predominantly carbon-based, which allow the dispersion of the active particles in an electrically conductive matrix consisting of porous nanoparticles with resilience properties and elasticity and which also present empty inter-particle spaces, said matrix, in addition to the charge transfer, also performs a compensation function of cyclical expansions / contractions to ensure the mechanical integrity of the electrical composite electrode for a relatively longer time.

The current configuration of industrial lithium ion batteries at the cathode side is composed of active material based on Cobalt, Manganese, Iron and their oxide [namely: LiCoO₂, LiMnO₂, LiFePO₄, LiNiₓCo_{y}Mn_{z}Oₖ (NMA), NiₓCo_{y}Al_{z}Oₖ (NCA)] and their capacities vary from 160mAh/gr to 250mAh/gr. To improve the energy density of batteries new cathode are necessary to be developed. Since Sulfur is one of the most abundant elements in earth's crust coupled with its high theoretical capacity of 1672 mAh g⁻¹, a lithium-sulfur battery has been proposed, which has been regarded as one of the most promising novel energy storage devices. A typical lithium-sulfur battery is consisted of Octasulfur (cyclo-Ss) as cathode, metal lithium as anode, electrolyte and membrane. Undergoing multiple steps, S₈ could be reduced to Li₂S and the corresponding reaction can be illustrated as follows:

S₈ + 2e⁻ → S₈²⁻ 3S₈²⁻ + 2e⁻ → 4S₆²⁻ (2.4 V vs Li/Li⁺) 2S₆²⁻ + 2e⁻ → 3S₄²⁻

S₄²⁻ + 2e⁻ + 4Li⁺ → 2Li₂S₂ Li₂S₂ + 2e⁻ + 2Li⁺ → 2Li₂S (2.1 V vs Li/Li⁺)

Although the lithium sulfur battery has been investigated for more than two decades there are several problems that need to be overcome for its practical applications. The major problems include the insulating nature of sulfur (5× 10⁻¹⁶ S cm⁻¹ at 25 °C), the sulfur cathode significant volume change due to the volume difference of elemental sulfur and reaction products, and the high solubility of intermediate products-polysulfides into organic electrolyte. The soluble high-order polysulfides intermediates (Sₓ²⁻, 4≤x≤8) are prone to dissolve in the electrolyte and shuttle between the cathode and anode during cycling. This phenomenon is defined as "shuttle effect". One of the most promising approaches to address these issues is to combine sulfur with conducting carbon matrices such as carbon nanotube CNT, and graphene.

The state of the art of industrially manufacturing process of the electrodes (anodes and cathodes) of lithium ion batteries and post lithium ion batteries provides as a first step, the mechanical mixing of the powder components of the electrodes. The active material powders and the material powders used as an additive, normally by means of a planetary mixer are stirred, which is followed by the addition of a solution (with organic solvent and / or aqueous) containing a polymeric binder, the whole is mixed until obtaining a slurry. The slurry obtained is coated on a copper foil (anode) or aluminum foil (cathode) to be then dried in an oven to evaporate the solvent and obtain the coated sheet; the electrode is subsequently roll pressed for the homogenization of its surface. The current method of manufacture of electrodes (anodes and cathodes) is extremely simple and employs four basic elements: 1) the active material powders; 2) the powders of additive materials; 3) the binder polymer; 4) the organic solvent and/or aqueous.

For example, the anodes normally realized for the lithium-ion batteries employ: 1) graphite powder as the active material; 2) powders of carbon materials (carbon black, nanotubes) as an additive material; 3) a binder polymer PVDF and/or SBR; 4) an organic solvent (NMP) and/or aqueous. For the anodes and cathode the functions and features of the four basic components mentioned may be summarized as follows:
The active material powders 1) have the functions of insert de-insert lithium ions during the charge-discharge, therefore their main feature is to accumulate the greatest possible quantity of lithium ions inside. The powders of additive materials 2) instead basically have the function to easily allow the passage of electric charges from the collector to the active material powders since said active materials generally do not exhibit good electrical conductivity. The fundamental characteristic which must present the additive materials are therefore a high electrical conductivity. The binder polymer 3) and the organic solvent and/or aqueous 4), once dissolved together, they must permit the realization of a slurry formed by the four elements described above; by evaporating the solvent by heating 4) from the slurry, the binder polymer 3) must perform the function of holding together the elements that form the composite electrode.

The solutions proposed up to now, and summarized previously, provide for the fabrication of electrodes more complex solutions compared to electrodes standard manufacturing process currently in production, which involve substantial modifications to conventional and established processes for their production at industrial level. Therefore, the state of the art, does not provides today the production of lithium-ion batteries that, while using the current industrial manufacturing process, have higher performance to the theoretical ones envisaged by the use of carbon in the anodes, and Cobalt, Manganese and Iron based oxide in the cathode and, above all, giving the rise to reliable batteries over time, which therefore ensure a considerable number of charge and discharge cycles, to allow their success and diffusion in applications that require specific energy and power higher than available.

### Scope of the invention

In general, it is an object of the present invention to provide electrode for lithium ion and post-lithium ion batteries which overcome the drawbacks of the known art. A first object of the present invention is to provide an electrode fabrication method for lithium ion and post lithium ion batteries that can be achieved without significantly changing the current conventional industrial processes. A further object of the present invention is to provide electrode for lithium ion and post lithium ion batteries that exhibit performance in terms of specific and specific power considerably higher than the available current energy. Also an important object of the present invention is to provide electrode for lithium ion and post lithium ion battery that is reliable over time, providing a significant number of charge and discharge cycles comparable if not superior to the current lithium ion batteries in production. Final, a further object of the present invention is to provide electrode for lithium ion and post lithium ion batteries that exhibit higher performance in terms of energy and specific power.

The present invention satisfies these goals, and represents a substantial improvement in the general state of the art.

### Description of the invention

The present invention aims at providing electrodes for lithium ion and post lithium ion batteries which comprise as active materials: Silicon (Si), or Germanium (Ge), or tin (Sn), or Tin Oxide SnOX (0.1 <x <2), or Silicon Oxide SiO x (0.1 <x <2), or Antimony-Tin (SnSb), or Sulfur; as a polymeric binder: PVDF, SBR or other polymeric binder which can be dissolved in an organic solvent and/or aqueous; and dahlia carbon nanohorns (SWCNH - Single Wall Carbon nanohorns) as additive materials.

Very advantageously said nanohorns carbon type dahlia are doped with heteroatoms belonging to elements of the group of non-metals of the Periodic Table such as nitrogen (N), in order to ensure a particularly significant number of charge and discharge cycles of the battery.

The category of carbon-based materials, to which belong also the type of dahlia carbon nanohorns, possibly doped and object of the present invention, it was found to be the category of the most promising materials as additives for lithium ion batteries.

Several experiments have been performed using as an active material for lithium ion batteries: Silicon (Si), or Germanium (Ge), or tin (Sn), or tin oxide SNOX (0.1 <x <2), or silicon oxide SiOx (0.1 <x <2), or Antimony-Tin (SnSb) or Sulfur, and different carbon-based materials such as carbon black, or carbon nanotubes, or graphene as additives.

The carbon black presents disadvantages due to the electrical conductivity which limits the performance as an additive. Unlike the nanotubes, and graphene, normally used as additives, have high electrical conductivity than carbon black. However the nanotubes have the form of very long tubes, while the graphene platelets have a flat and very thin shape; both do not have a spherical symmetry which allows to uniformly wrap the particles of active materials with different points of contact; also the nanotubes and the graphene although presenting good characteristics of resilience and elasticity, respectively, the first form of a long and thin wire and the other a flat shape, which does not allow to effectively compensate the considerable expansions of the particles of the active materials during charge cycles. Carbon nanohorns type pure dahlia, which are non-doped with heteroatoms, are, in addition to the nanotubes, and graphene, the carbon based materials that possess characteristics suitable to be used as additives in the electrodes of lithium ion batteries.

The term carbon nanohorns in literature is referred to the family of carbon nanoparticles formed by different types of nanoparticles; these particles belong to the family of carbon nanohorns nanoparticles called: "seed carbon nanohorns", "bud", "dahlia" and "petal-dahlia". Herein after the carbon nanohorns term will refer to the dahlia carbon nanohorns that are suitable to be used as additives in lithium ion batteries and also, together with the "petal-dahlia carbon nanohorns", can be doped with heteroatoms.

Herein after the term "carbon nanohorns type dahlia" includes in this statement also "carbon nanohorns dahlia petal-type".

The carbon nanohorns of pure dahlia are produced as nanoparticles of size normally ranging from about 40nm and about 140nm; these nanoparticles have porous internal cavity shaped spherically symmetric; such materials have good mechanical characteristics of resilience, that allow to absorb energy if subjected to deformation, elastic and are, therefore, able to oppose the mechanical strength to forces that are applied from the outside to regain its original shape when these forces cease.

These carbon nanohorns type dahlia present, even if compressed, voids interparticle spaces due to their shape and the spherical symmetry. Therefore said nanoparticles, once uniformly dispersed, in appropriate concentrations, with particles of active materials, are able to effectively compensate the considerable expansion of the active material particles during the charge-discharge cycles.

In fact, used for example as additives together with active materials such as silicon particles, allow to realize lithium ion batteries with benefits in terms of energies and specific powers much higher than those of the batteries currently available. Indeed lithium ion batteries which employ nanohorns in the anodes of type dahlia pure carbon with a higher performance than batteries currently available are described in patent JP2013187097 and JP2010118330, even if they are not being used as additives in conventional industrial processes of production of lithium ion batteries.

From trials, performed recently and exemplified in Example 2 (detailed description of the invention), it was found that the use of carbon nanohorns type dahlia pure in anodes (as well as cathode) for lithium ion and post lithium ion batteries allows to obtain, only for a limited number of charge and discharge cycles, batteries with higher performance in terms of energy and specific power than currently available lithium ion batteries on the market. The use of said type of dahlia pure carbon nanohorns involves, after short running, cycles with high performances, followed by a substantial progressive reduction of the charge capacity after a number of cycles, and, in several cases, to the inactivity of the battery. In consequence it can only be used in applications with limited durability requirements. In fact, the carbon nanohorns type dahlia pure, although presenting the features described above, cannot prevent the phenomenon of fragmentation of the active material particles. Therefore the use of Type Dahlia carbon nanohorns while performing well, based on their characteristics, the cyclical expansion / contraction compensation function with active particles, do not ensure the complete integrity in time of the active particles that are still subject to fragmentation over time.

In fact, some active particles may give rise to the partial fragmentation that causes the loss of electric continuity with other surrounding composite particles present in the electrode, with consequent interruption of the process of insertion and extraction of lithium ion from the active particles, which originates a loss in capacity of the electrode.

Advantageously, to avoid, as described previously, the loss of mechanical and then electrical continuity between the active particles an additive material is necessary to be add in the electrode. It is necessary to establish a three-dimensional network of constraints / links between the particles of additive material and active particles, that ensures the mechanical stability of the electrode composite and consequently electrical continuity.

As described previously, the carbon nanohorns type dahlia are materials of nanometric dimensions, similar to the carbon black normally used as an additive, but unlike carbon black, does not exhibits an amorphous structure. In particular, from the surface of the nanohorns type dahlia come out the single-wall structures graphene based cone shaped that, while presenting defects, appear to have a substantial crystalline structure. It is well known that it is possible to dope the carbon nanostructures graphene conical shape surface of the nanohorns type dahlia incorporating, in said cones, atoms of some elements belonging to the nonmetals of the Periodic Table group, posing chemical affinity and atomic radius compatible with the carbon as the nitrogen (N).

The properties and characteristics, described previously, for nanohorns of type dahlia pure carbon, such as the size of the nanoparticles, the resilience, the shape to spherical symmetry, elasticity, porosity, electrical conductivity remain substantially unchanged even for nanohorns type dahlia doped with the stated heteroatom.

Therefore also said type Dahlia carbon nanohorns doped with said heteroatoms, once uniformly dispersed, with appropriate concentrations by weight, with particles of active materials, are able to effectively compensate the considerable expansions of the particles of the active materials during charge-discharge cycles. Furthermore, the doping of said nanohorns type dahlia gives them more characteristics of the surface, useful for the purposes of the present invention. The doping of carbon nanostructures with graphene hetero atoms gives rise to a change of surface chemical and physical properties of these nanostructures useful to achieve predetermined goals. In particular, on the surface of such nanostructures, and specifically on the surface of the carbon nanohorns of type Dahlia doped with hetero atoms, are established around the doping sites, phenomena involving chemisorption reactions and therefore chemical or electrostatic attractions ties between the area of said nanohorns and active materials that come into surface contact with nanohorns type dahlia.

In particular, the Nitrogen has a greater electronegativity than carbon, the bonds C-N generate permanent electrical dipoles on the surfaces of the graphene cones of nanohorns, also the built-in Nitrogen graphene cones presents excess valence electrons, and introduces an excess of π-electrons on the surface; then incorporating nitrogen in dahlia nanohorns introduces permanent electrical dipoles and isolated pairs of electrons by increasing the surface chemical reactivity and allowing the formation of links between sites with nitrogen and micro / nanoparticles of active material surrounding; these links can be established advantageously during the step of the preparation of the slurry using a solvent and / or during the heating phase of the coating in the oven for evaporation of the solvent.

Advantageously it is possible to employ as additives pure carbon nanohorns and pure dahlia type doped with nitrogen, which allows an increase of the number of battery life cycles. Carbon nanohorns like carbon dahlia, pure or doped, can be used as additives materials uniformly dispersed in mixtures with other carbon base materials as carbon black, carbon nanotubes, graphene.

Advantageously, it possible to use carbon nanohorns dahlia, pure or doped, and uniformly dispersed in mixtures with other carbon based materials. The percentage of carbon nanohorns by weight of carbon nanohorns type dahlia on the total of additive materials is higher than 50% and even more advantageously greater than 75%. With this composition is possible to obtain lithium ion batteries and post lithium ion batteries with higher power and specific energy and long charge and discharge cycles.

As previously indicated, the dahlia carbon nanohorns are produced as nanoparticles with normally sizes between 40nm and 140nm. Advantageously, the dimensions of carbon nanohorns, allow to effectively compensate the considerable expansions of the particles of the active materials during charge-discharge cycles, once they are dispersed uniformly with appropriate weight concentrations of active material particles that have the size between 5nm and 2µm.

Advantageously, for the compensation of the expansion of active materials with particle size from 5nm to 2µm, the weight concentrations of carbon nanohorns should be comprised between 5% and 60% compared to the weight of active materials present in electrode.

The concentrations by weight of additive materials assume smaller values in the case of high specific weight active materials, and greater values in the case of a low specific weight active materials.

Even more advantageously, with dimensions of active material particles comprised between 30nm and 1 micron, the weight concentrations of additive materials with respect to the active materials, (for the compensation of the expansions of the active materials) are between 10% and 50% compared to the weight of active materials present in the electrodes. The concentrations by weight of additives materials reach the lower values in the case of high specific weight active materials and values greater in the case of a low specific weight active materials.

The heteroatom easy and quick to use for doping nanohorns type dahlia is the nitrogen atom whose atomic dimensions are more closely resemble those of carbon. Advantageously, according to the present invention, the atomic percentages doping with Nitrogen of the dahlia carbon nanohorns are generally below 15%.

Advantageously the atomic percentages of the doping of the carbon nanohorns type dahlia are for Nitrogen, comprised between 0.1% and 10%; even more advantageously preferably between 0.5% and 6% to obtain the best performance in terms of specific and life cycles of power and energy.

Very advantageously during the electrodes preparation, the utilization of N-doped carbon nanohorns, facilitates the dispersion of the powder in the solvent, and results in a more omogeneous and stable slurry. This is obtained because the zeta potential is much higher for carbon nanohorns doped with Nitrogen than without.

Advantageously, the formation of chemical bonds and/or electrostatic bonds, in correspondence of doping sites, between the carbon nanohorns dahlia doped with heteroatoms of nitrogen originates therefore, a stable three-dimensional reticular structure between the cones graphene doped with heteroatoms of nanohorns type of dahlia and the active material particles surrounding.

Advantageously it is thus to realize in the electrode, a three-dimensional network of interactions between doped sites with heteroatoms in robust and flexible graphene cones of nanohorns dahlia, and active material particles. Advantageously said doped carbon nanohorns provides an excellent electronic connectivity and a structural stability of the electrode.

In fact, also in the case of partial fragmentation of active particles, the fragments remain connected mechanically and electrically to the additive material consists of carbon nanohorns dahlia doped.

Advantageously, this kind of resilient and elastic structure can also accommodate large changes in the volume of active particles, and enables them to expand freely during the charge-discharge cycles due to the mechanical properties of nanohorns Dahlia doped.

Advantageously the nanohorns dahlia doped also play a protective function of the active particles from the direct contact with the electrolyte.

### Brief Description of Drawings

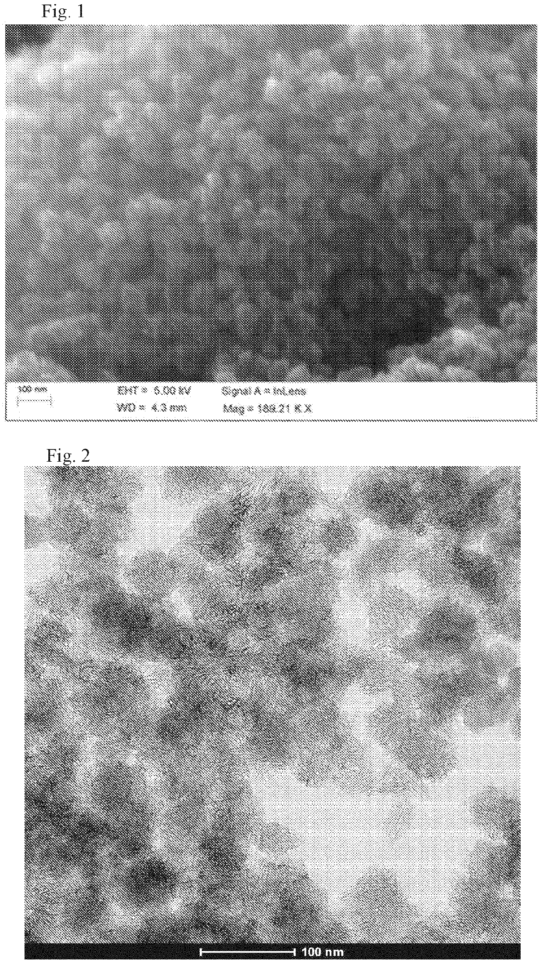

Fig.1 represents the SEM image of Dahlia type carbon nanohorns.
Fig.2 shows a TEM image of a Dahlia type carbon nanohorns.

### Detailed description

The present invention consists in the preparation of electrodes for lithium ion batteries and post lithium ion batteries, according to the previous description, by employing the carbon nanohorns dahlia type doped nitrogen, which can replace partially or totally the common additives (for example, but not limited to, carbon black, or carbon nanotubes: CNTs) used in the manufacture of electrodes for the assembly of lithium ion batteries and post lithium ion batteries for increasing the internal conductivity of the same, their performance and their stability. The preparative is to: mix the electrode polymer binder based on PVDF [Poly (vynilidene fluoride)] with the organic solvent NMP (methylpyrrolidone) in the proportions 20% by weight of PVDF and 80% by weight of NMP, heated to 60 ° C until all of the PVDF is dissolved and stir with magnetic stirrer for 30 minutes. The obtained solution is added to the powder blend of active material and additive material previously uniformly dispersed by mechanical means. Following are described in the examples 1,2,3,4,5,6 accomplishments of 5 types of electrodes for lithium ion and post lithium ion batteries using materials as additives, respectively: carbon black, carbon nanohorns type dahlia pure, carbon nanohorns type dahlia doped nitrogen.

Subsequently, after the manufacturing of the five types of electrodes they were characterized by the electrochemical point of view by semi-cells. The results of the electrochemical characterizations through semi-cells demonstrate how the electrodes that use nanohorns dahlia type doped with Nitrogen fully satisfy the purposes of the present invention. Example 1 - Preparation of electrode with silicon and carbon black additive. For the preparation of 10 mg of slurry solution, which are sufficient to prepare 1cm2 of surface area electrodes, were mixed 6 mg of amorphous silicon nanometric powder (50nm) for 5 minutes in a mortar to homogenize, then 3 mg of carbon black were added. Carbon black is the additive normally used in lithium ion batteries. Then the powders were mixed for 5 minutes. At this point was added 1 mg of PVDF dissolved in the NMP solution previously prepared and all the solution was mixed for 30 minutes under magnetic stirring. If the slurry was still dense, a few drops of NMP were added.

Then, the prepared slurry solution was coated by the method of "Doctor blade" on a copper foil of 15 microns thickness and then heated to 40 °C under vacuum to evaporate the NMP and then heated for 8 hours at 120 °C to obtain the final electrode.

Example 2 - Preparation of electrode with silicon and carbon nanohorns Dahlia type as pure additive.

For the preparation of 10 mg slurry solution, which are sufficient to prepare 1cm2 of surface area electrodes, have been mixed 6 mg of silicon powder amorphous nanometer (50nm) for 5 minutes in a mortar to homogenize, then were added 3 mg of the carbon nanohorns type dahlia pure (un-doped) having an average diameter of about 70nm to 75nm and then the powders were mixed for 5 minutes. At this point was added 1 mg of PVDF previously dissolved in NMP solution and the whole was stirred for 30 minutes under magnetic stirring. If the slurry was still dense, it was added a few drops of NMP.

The slurry solution thus prepared was coated with the method of "doctor blade" on a copper foil of 15 microns thickness, then the whole was heated to 40 °C under vacuum to evaporate the NMP and then the whole was heated again for 8 hours at 120 °C to obtain the final electrode.

Example 3 - Preparation of electrode with silicon and dahlia carbon nanohorns doped with nitrogen as additive.

For the preparation of 10 mg of slurry solution, which are sufficient to prepare electrodes 1cm2 of surface area 6 mg of amorphous silicon nanometric powder (50nm), were mixed for 5 minutes in a mortar to homogenize, then 3 mg of carbon nanohorns type dahlia doped with nitrogen in atomic percentage to about 2.5% having an average diameter of around 65 ÷ 70nm were added and then the powders were mixed for 5 minutes. At this point was added 1 mg of PVDF dissolved in NMP solution previously and was stirred the whole for 30 minutes under magnetic stirring. If the slurry was still dense a few drops of NMP were added. The slurry solution so prepared was coated with the "doctor blade" method on a copper foil of thickness of 15 microns, then heated to 40 ° C under vacuum to evaporate the NMP and then the electrode was heated again for 8 hours at 120 ° C to obtain the final electrode.

Example 4 - Preparation of electrode with Sn and dahlia carbon nanohorns doped with nitrogen as additive.

For the preparation of 10 mg of slurry solution, which are sufficient to prepare electrodes 1cm2 of surface area 7 mg of Tin (Sn) nanometric powder (100 nm) were weighted, then 2 mg of carbon nanohorns type dahlia doped with nitrogen in atomic percentage to about 2.5% having an average diameter of around 65 ÷ 70nm were added and then the powders were mixed for 5 minutes. At this point was added 1 mg of PVDF dissolved in NMP solution previously and was stirred the whole for 30 minutes under magnetic stirring. If the slurry was still dense a few drops of NMP were added. The slurry solution so prepared was coated with the "doctor blade" method on a copper foil of thickness of 15 microns, then heated to 40 ° C under vacuum to evaporate the NMP and then the electrode was heated again for 8 hours at 120 ° C to obtain the final electrode.

Example 5 - Preparation of electrode with sulfur and dahlia carbon nanohorns pure.

A melt diffusion method was used to prepare carbon nanohorns type dahlia pure and sulfur composites. Typically, carbon nanohorns type dahlia pure and sulfur with weight ratios of 1:5 were dissolved in 5 mL of carbon disulfide (CS₂) and sonicated for 1 hr at room temperature. After evaporating CS₂, dried carbon-sulfur (C-S) mixture was placed in crucible and heated at 155 °C for 24 hours under argon environment. The slurry was prepared with composition: 90% C-S composite, 5% super-P carbon, and 5% polyvinylidene difluoride (PVDF) mixed with an appropriate amount of N-methyl-2-pyrrolidone. The slurry solution so prepared was coated with the "doctor blade" method on aluminum foil of 15 microns thickness. The casted electrodes were dried overnight at 60 °C. Example 6 - Preparation of electrode with sulfur and dahlia carbon nanohorns doped with nitrogen as additive.

A melt diffusion method was used to prepare carbon nanohorns type dahlia doped with Nitrogen and sulfur composites. Typically, carbon nanohorns type dahlia doped with Nitrogen and sulfur with weight ratios of 1:5 were dissolved in 5 mL of carbon disulfide (CS₂) and sonicated for 1 hr at room temperature. After evaporating CS₂, dried carbon-sulfur (C-S) mixture was placed in crucible and heated at 155 °C for 24 hours under argon environment. The slurry was prepared with composition: 90% C-S composite, 5% super-P carbon, and 5% polyvinylidene difluoride (PVDF) mixed with an appropriate amount of N-methyl-2-pyrrolidone. The slurry solution so prepared was coated with the "doctor blade" method on aluminum foil of 15 microns thickness. The casted electrodes were dried overnight at 60 °C.

Electrochemical characterization by means of half-cell of the electrodes prepared according to examples 1,2,3,4,5,6.

Once prepared electrodes (3 for type of additive) were inserted into the drop-box with a H2O content of less than <0.1ppm and were assembled 18 semi-electrochemical cells (3 for each type). The cells used were of the type 2023 coin-cell and consist of a pure lithium electrode that serves as reference and counter electrode (of surface size of 1cm2), a type polymeric separator "Celgard" soaked in an EC: DMC solution (1 : 1) containing a quantity of 1M LiPF6 (electrolyte solution standards) and the silicon-based and sulfure based electrode of which has been reported before manufacture. In the case of Sulfur based electrode a different electrolyte was used with composition of 1M Lithium bis(trifluoromethanesulphonyl)imide in 1,3-dioxolane:1,2- dimethoxyethane solution (1:1) with 0.1 M of LiNO₃ as an additive.

The semi-cells thus assembled were measured with a potentiostat for galvanostatic charge and discharge cycle with the charge-discharge density symmetrical and equal to 0.1C.

For the electrode silicon-based the potential was between 0.03V to 1.5V and at room temperature (about 25 ° C). For the Sulfur based electrode the potential was between 1.8V to 2.8V and at room temperature (about 25 ° C).

The three semi-cells that contained carbon black as additive reported discharge values at around 110 mAh / g, one of the three then stopped working after seven cycles while the other 2 were run up to 10 cycles. The three semi-cells containing carbon nanohorns type dahlia pure as an additive showed reversible capacity of about 2210 mAh / g for twenty cycles and then have stop functioning from 21 to 25 cycles. The three semi-cells containing silicon with carbon nanohorns type dahlia doped with nitrogen at about 2% surface atomic ratio, have showed a reversible capacity of about 2310mAh / g for 500 cycles and then were stopped. The three semi-cells containing Sulfur with carbon nanohorns type dahlia doped with nitrogen at about 2% surface atomic ration showed a reversible capacity of 1000mAh/gr for 500 cycles and then were stopped. The experiments performed with the three different types of additives clearly shows that the electrode prepared with nanometric powder based nanohorns type dahlia doped with nitrogen gives rise to a high energy density cell that can be reversibly cycled for hundreds of cycles. On the contrary the cell containing carbon nanohorns of type dahlia pure stop functioning after tens of cycles of charge and discharge, while the cell with carbon black as an additive does not work at all. These measures illustrate the excellent properties of carbon nanohorns powders of type dahlia doped with nitrogen in order to achieve the purposes of the present invention.

## Claims

1. Electrodes for lithium ion and post lithium ion batteries comprising as active material: silicon (Si), or germanium (Ge), or tin (Sn), or SnOX Tin Oxide 0.1<x<2, or silicon oxide SiOx 0.1<x<2 or Antimony-Tin (SnSb) or Sulfur; as a binder polymer: a PVDF polymer-based materials, SBR or other binder polymer which can be dissolved in an organic solvent and / or aqueous; that uses as additives materials carbon nanohorns type dahlia, SWCNH - Single Wall Carbon nanohorns, said type of dahlia carbon nanohorns additive materials, SWCNH - Single Wall Carbon nanohorns, are doped with heteroatoms said heteroatoms are nitrogen.

2. Electrodes for lithium ion and post lithium ion batteries according to claim 1 **characterized by** the fact that said additive materials are uniformly dispersed in mixtures with other carbon-based materials.

3. Electrodes for lithium ion and post lithium ion batteries according to one of the preceding claims **characterized by** the fact that the percentage in weight of carbon nanohorns type dahlia on the total of additive materials is higher than 50% and preferably greater than to 75%.

4. Electrodes for lithium ion and post lithium ion batteries according to claim 1 **characterized by** the fact that the active material particles have a size between 5nm and 2µm and preferably comprised between 30nm and 1 micron.

5. Electrodes for lithium ion and post lithium ion batteries according to one or more of claims 1 to 4 **characterized by** the fact that the concentration of the additive materials with respect to the active materials is comprised between 5% and 60% compared to the weight of active materials, when said active materials have the dimensions between 5nm and 2µm.

6. Electrodes for lithium ion and post lithium ion batteries according to one or more of claims 1 to 4 **characterized by** the fact that the concentration of the additive materials with respect to the active materials is between 10% to 50% compared to the weight of active materials, when said active materials have the size between 30nm and 1 micron.

7. Electrodes for lithium ion and post lithium ion batteries according to claim 1 **characterized by** the fact that the surface atomic percentage of carbon of nanohorns type doping dahlia is less than 15%, preferably between 0.1% and 10% and even more preferably comprised between 0.5% and 6%.

## Patentansprüche

1. Elektroden für Lithium-Ionen- und Post-Lithium-Ionen-Batterien, die Folgendes als aktiven Stoff umfassen: Silizium (Si) oder Germanium (Ge) oder Zinn (Sn) oder SnOX Zinnoxid 0,1<x<2 oder Siliziumoxid SiOx 0,1<x<2 oder Antimon-Zinn (SnSb) oder Schwefel; als Bindemittelpolymer: einen Stoff auf PVDF-Polymer-Basis, SBR oder ein anderes Bindemittelpolymer, das in einem organischen Lösungsmittel und/oder in Wasser gelöst werden kann; die als Zusatzstoffe Kohlenstoffnanohörner vom Typ Dahlie, SWCNH (einwandige Kohlenstoff-Nanohörner), verwenden, wobei diese Kohlenstoffnanohörner-Zusatzstoffe vom Typ Dahlie, SWCNH (einwandige Kohlenstoff-Nanohörner), mit Heteroatomen dotiert sind, wobei die Heteroatome Stickstoff sind.

2. Elektroden für Lithium-Ionen- und Post-Lithium-Ionen-Batterien nach Anspruch 1, **dadurch gekennzeichnet, dass** die genannten Zusatzstoffe gleichmäßig in Mischungen mit anderen Stoffen auf Kohlenstoffbasis dispergiert sind.

3. Elektroden für Lithium-Ionen- und Post-Lithium-Ionen-Batterien nach einem der vorstehenden Ansprüche, **dadurch gekennzeichnet, dass** der Gewichtsprozentsatz von Kohlenstoffnanohörnern vom Typ Dahlie, bezogen auf die Gesamtmenge der Zusatzstoffe, höher als 50 % und vorzugsweise höher als 75 % ist.

4. Elektroden für Lithium-Ionen- und Post-Lithium-Ionen-Batterien nach Anspruch 1, **dadurch gekennzeichnet, dass** die Partikel des aktiven Stoffs eine Größe zwischen 5 nm und 2 µm aufweisen und vorzugsweise zwischen 30 nm und 1 Mikron liegen.

5. Elektroden für Lithium-Ionen- und Post-Lithium-Ionen-Batterien nach einem oder mehreren der Ansprüche 1 bis 4, **dadurch gekennzeichnet, dass** die Konzentration der Zusatzstoffe in Bezug auf die aktiven Stoffe zwischen 5 % und 60 % im Vergleich zum Gewicht der aktiven Stoffe liegt, wenn die aktiven Stoffe die Abmessungen zwischen 5 nm und 2 µm aufweisen.

6. Elektroden für Lithium-Ionen- und Post-Lithium-Ionen-Batterien nach einem oder mehreren der Ansprüche 1 bis 4, **dadurch gekennzeichnet, dass** die Konzentration der Zusatzstoffe in Bezug auf die aktiven Stoffe zwischen 10 % und 50 % im Vergleich zum Gewicht der aktiven Stoffe liegt, wenn die aktiven Stoffe eine Größe zwischen 30 nm und 1 Mikron aufweisen.

7. Elektroden für Lithium-Ionen- und Post-Lithium-Ionen-Batterien nach Anspruch 1, **dadurch gekennzeichnet, dass** der atomare Oberflächenanteil der mit Typ Dahlie dotierten Kohlenstoffnanohörner weniger als 15 %, vorzugsweise zwischen 0,1 % und 10 % und noch bevorzugter zwischen 0,5 % und 6 % beträgt.

## Revendications

1. Electrodes pour batteries aux ions lithium et aux ions post-lithium comprenant comme substance active: silicium (Si) ou germanium (Ge) ou étain (Sn) ou SnOX Oxide d'étain 0,1 <x <2, ou oxyde de silicium SiOx 0,1 <x <2 ou Antimoine-Étain (SnSb) ou Soufre; comme polymère liant: une substance à base de polymère PVDF, SBR ou autre polymère liant qui peut être dissout dans un solvant organique et / ou aqueux; qui utilise comme substances additives des nanohorns de carbone de type dahlia, SWCNH - Nanohorns de carbone à paroi simple, dits substances additives de nanohorns type carbone de dahlia, SWCNH - nanohorns de carbone à paroi simple, sont dopés avec des hétéroatomes, lesdits hétéroatomes sont de l'azote.

2. Electrodes pour batteries aux ions lithium et aux ions post-lithium selon la revendication 1 **caractérisée par le fait que** lesdites substances additives sont dispersées uniformément en mélange avec d'autres substances à base de carbone.

3. Electrodes pour batteries aux ions lithium et aux ions post-lithium selon une des revendications précédentes **caractérisée par le fait que** le pourcentage en poids du nanohorn de carbone de type dahlia sur le total des substances additives, est plus élevé de 50% et préférablement supérieur à 75%.

4. Electrodes pour batteries aux ions lithium et aux ions post-lithium selon la revendication 1 **caractérisée par le fait que** les particules de substance actives ont une dimension comprise entre 5 nm et 2 µm et préférablement comprise entre 30nm et 1 micron.

5. Electrodes pour batteries aux ions lithium et aux ions post-lithium selon une ou plusieurs des revendications de 1 à 4 **caractérisées par le fait que** la concentration de substances additives par rapport aux substances actives est comprise entre 5% et 60% par rapport au poids des substances actives, quand lesdites substances actives ont des dimensions entre 5nm et 2 µm.

6. Electrodes pour batteries aux ions lithium et aux ions post-lithium selon une ou plusieurs des revendications del à 4 **caractérisées par le fait que** la concentration des substances additives par rapport aux substances actives est comprise entre 10% à 50% par rapport au poids des substances actives, lorsque lesdites substances actives ont une taille comprise entre 30 nm et 1 micron.

7. Electrodes pour batteries aux ions lithium et aux ions post-lithium selon la revendication 1 **caractérisée par le fait que** le pourcentage de surface atomique de carbone de type nanohorns dopant dahlia est inférieur à 15%, de préférence compris entre 0,1% et 10% et encore plus préférablement compris entre 0,5% et 6%.
